# EUROPEAN PATENT APPLICATION

(11) **EP 3 130 648 A1**
(43) Date of publication of application: **15.02.2017**
(21) Application number: 15776856.5
(22) Date of filing: 13.04.2015
(51) Int. Cl.: C09K 5/00, C09K 5/12

(54) **NOVEL SALINE INORGANIC COMPOUND MATERIALS FOR PRODUCING HEAT-TRANSFER AND CONCENTRATOR FLUIDS**

(30) Priority: 11.04.2014 ES 201400309
(71) Applicant: Universidad Complutense De Madrid, 28040 Madrid (ES)
(72) Inventor: PEREZ TRUJILLO, Francisco Javier, E-28040 Madrid (ES); LASANTA CARRASCO, María Isabel, E-28040 Madrid (ES); DE MIGUEL GAMO, María Teresa, E-28040 Madrid (ES); GARCIA MARTIN, Gustavo, E-28040 Madrid (ES)
(74) Representative: Carvajal y Urquijo, Isabel
(86) International application number: PCT/ES2015/070289
(87) International publication number: WO 2015/155401

(57) **Abstract**

The composite material comprises nitrate and chloride anion inorganic salts which may also comprise sulphates, carbonates and/or nitrites and organic and inorganic nanoparticles, such as graphene, and cations of the alkaline, earth-alkaline, earth, carbon and/or amphigenic chemical groups.

Said formulations have chemical and physical characteristics, such as the heat capacity, thermal stability and thermal conductivity thereof which make them optimum for being used as an alternative to the commercially available binary mixture in concentrating solar power plants.

## Description

### Field of the invention

The present invention belongs to the field of molten materials for application thereof in any sector requiring thermal storage by means of sensible heat. More particularly, the invention refers to inorganic salt compositions for use thereof as heat transfer fluid in concentrating solar power (CSP) plants.

### State of the art

Currently, solar thermal technologies, as for example that used in central tower plants, make a plurality of light beams to have incidence on a receiver with the purpose of using that heat for boiling water and generating steam which moves a turbine so as to produce electricity.

The two main challenges that solar thermal plants have to face currently, are to improve the environmental sustainability thereof and to increase their competitiveness against conventional plants, wherein reducing the cost of the energy they produce is one of the main needs.

Choosing the materials which transfer and store heat in the solar thermal plants is a key element for improving performance thereof.

Cylinder-parabolic collector technology may incorporate power storage features so as to produce electricity in hours of darkness. This storage is performed in two tanks with molten salts, storing heat in the same way as in central tower plants. The storage system (indirect) comprises two tanks with molten salts (NaNO₃ 60% + KNO₃ 40%), a composition known as "Solar Salt", with working temperatures of 291°C in the cold tank and 384°C in the hot tank, being the maximum storage time 8 hours for this type of plants.

Solar radiation is captured by a fluid independently to the molten salt (HTF) in the heliostats field. This fluid that flows through the collectors is synthetic oil, acting as a fluid for conveying heat up to a heat exchanger having molten salt, which is used in power storage operations. Then, and during the discharge cycle, the salt goes through a steam generator which actuates a turbine, obtaining electricity.

If the targeted temperatures are moderate (200°C), demineralized water or ethylene glycol, can be used as solar radiation collecting fluid. For temperatures between 200 and 450°C synthetic oil is used comprising 75% diphenylether (C₆H₅O) and 25% biphenyl (aromatic hydrocarbon having the molecular formula C₁₂H₁₀). This latter hydrocarbon may cause high temperature problems due to the risk of explosion it involves, so the temperature control thereof constitutes a safety parameter in the plant, such that the maximum working temperature is limited to 390°C in these plants.

Nowadays, the storage system which is mostly used is that with molten salts, since these feature optimum conditions for power storage thanks to the physical-chemical properties thereof (they feature high density, high heat capacity, high temperature and very low steam pressure even at high temperature).

There are many commercially available salts in very similar working ranges. Alkaline and alkaline-earth nitrate salts are the most adequate for being applied due to the physical-chemical properties thereof. It always has to be taken into account that eutectic mixtures have melting points being lower than pure salts.

The salts which have been mostly commercialized for this use are those commercially known as *Hitec.* The following table illustrates the salt compositions most frequently used for the physical-chemical properties and the competitive cost thereof compared to organic fluids.

**Table I. Composition of the commercially available salts**

| **Name** | **Formulation** | **Melting T** | **Tª decomposition** |
|---|---|---|---|
| | | **[ºC]** | **[ºC]** |
| **Hitec** | 7% NaN03 + 53% KN03+ 40%NaN02 | 142 | 538 |
| **Hitec XL** | 48% Ca(N03)2 + 7% NaN03+ 45% KN03 | 130 | 500 |
| **Hitec solar salt** | 60% NaN03 + 40% KN03 | 220 | 580 |

The main problem these commercially available compositions feature is their behaviour against corrosion of steels which are in contact with the molten salt, and the high freezing point of the binary salt currently used (220°C). This high freezing point requires that the areas of the plant through which the fluid circulates must be kept above this temperature, with the subsequent high energy consumption of the plant.

In order to avoid this freezing, 25 kW heaters are introduced in the cold tank and along the ducting so as to guarantee that the temperature does not low down in days with a lower solar radiation index.

Because of all the above, there is a need for obtaining compounds which can be used as thermal storage materials, which allow to increase the range of working temperatures, with high thermal stability and low cost.

Different salt compositions have been described with the purpose of improving their properties for use thereof in thermal power plants. Thus, the document WO2013/116515 describes ternary and quaternary combinations of anions and cations with melting temperatures of 185ºC using 100% sulphates as anionic components. The document US2013180520 discloses compositions which allow working with quaternary mixtures with melting points of about 260ºC and thermal stability up to 650ºC, using 100% chlorides as anionic components.

Surprisingly, the inventors have found a series of formulations constituted by inorganic composite materials having low melting points and high stability temperature. Additionally, they are associated to improved properties as heat transfer fluid (viscosity, specific heat, thermal conductivity, density and steam pressure), which involves improved behaviour against corrosion of the materials containing them with respect to the commercially available binary salt.

Formulations object of the present invention comprise inorganic nitrate, chloride, sulphate, carbonate and/or nitrite salts. Additionally, they comprise inorganic or organic nanoparticles, such as graphene. They can be used as heat-carrying or thermal storage material in concentrating solar plants (CPS).

### Detailed description of the invention

The present invention describes a series of composite materials constituted by inorganic chemical formulations, and the addition of inorganic and organic nanoparticles for use thereof in manufacturing heat-carrying and solar energy storage fluids, the melting temperatures of which are in the range between 130 - 200ºC, with thermal decomposition temperatures higher than 580ºC.

Said formulations feature physical and chemical characteristics, such as heat capacity, thermal stability and thermal conductivity thereof which make them optimum for being used as an alternative to the commercially available binary mixture in concentrating solar power plants.

In a main embodiment of the invention, a saline inorganic composite material is contemplated as a heat-carrying and solar energy storage fluid which comprises inorganic chemical formulations based on combining nitrate and chloride inorganic salts. Furthermore, said formulations comprise, at least, two cations from the alkaline, alkaline-earth, earth, carbon or amphigenic chemical groups. Particularly, they comprise heavy metal chlorides of the group IV. Furthermore, the composite material of the invention comprises organic and inorganic nanoparticles.

In a particular embodiment of the composite material of the invention, the combination of nitrate and chloride inorganic salts additionally comprises other inorganic salts selected from sulphates, carbonates, nitrites and combinations thereof. Preferably, it is contemplated combinations of nitrates and chlorides; nitrates, nitrites and chlorides; nitrates, sulphates and chlorides; carbonates and chlorides; nitrates, nitrites, sulphates and chlorides; and nitrates, carbonates, sulphates and chlorides.

In a particular embodiment of the composite material of the invention, the chemical formulation comprises a mixture of nitrates and chlorides having a 1-99% by weight of nitrates and 1-49% by weight of chlorides; or a mixture of nitrates, nitrites and chlorides having a 50-99% by weight of nitrates, 1-49% by weight of sulphates and 1-49% by weight of chlorides; or a mixture of nitrates, sulphates and chlorides having 50-99% by weight of nitrates, 1-49% by weight of sulphates and 1-49% by weight of chlorides; or a mixture of nitrates, carbonates and chlorides having 50-99% by weight of nitrates, 1-49% by weight of carbonates and 1-49% by weight of chlorides; or a mixture of nitrates, nitrites, carbonates and chlorides having 50-99% by weight of nitrates, 1-49% by weight of nitrites, 1-49% by weight of carbonates and 1-49% by weight of chlorides; or a mixture of nitrates, nitrites, sulphates and chlorides and nitrates, having 50-99% by weight of nitrates, 1-49% by weight of nitrites, 1-49% by weight of sulphates and 1-49% by weight of chlorides; or a mixture of nitrates, carbonates, sulphates and chlorides having 50-99% by weight of nitrates, 1-49% by weight of carbonates, 1-49% by weight of sulphates and 1-49% by weight of chlorides.

In a particular embodiment of the invention, the composite material is also added, at least, one element selected from sodium, potassium and calcium cations.

In another particular embodiment, the novel composite material may additionally comprise, at least, a cation from the list consisting of rubidium, caesium, lithium, magnesium, strontium, barium, aluminium, silver, thallium, zinc, nickel, tin and lead.

Combination of said saline inorganic formulations, together with addition of the cations mentioned above, allows obtaining a mixture the physical and chemical properties of which make them suitable for use thereof as an alternative to the mixture of NaNO₃+ KNO₃ currently used as a solar storage fluid. Additionally, these new formulations are very competitive regarding their cost with respect to the commercially available binary mixture.

In a preferred embodiment of the chemical formulation of the invention the saline inorganic compound comprises the rubidium cation or the caesium cation or the lithium cation or the magnesium cation or the strontium cation or the barium cation or the aluminium cation or the silver cation or the thallium cation or the zinc cation or the nickel cation or the tin cation or the lead cation, in a proportion of 1-15% by weight with respect to the total weight of the saline inorganic composite material.

In another particular embodiment of the invention, the saline inorganic compound comprises inorganic and organic materials (such as for example graphene), in a proportion ranging between 0.1 and 5% by weight with respect to the total weight of the saline inorganic composite material.

Incorporating inorganic and organic particles significantly improve thermal conductivity and reduce the melting point of the final chemical formulation, optimizing performance thereof when applying them as a heat-carrying and thermal storage material in concentrating solar power (CSP) plants.

Finally, in another main embodiment of the invention, a heat-carrying and thermal storage fluid is contemplated comprising the saline inorganic composite material of the invention.

In a particular embodiment, said fluid features a melting temperature between 130 and 230ºC and a decomposition temperature higher to 580ºC.

### Embodiment of the invention

The present invention is additionally illustrated by means of the following examples, which are not intended to be limitative of the scope thereof.

### Example 1

This example shows the thermal characterization of a binary mixture of nitrates and chlorides, having a 1-99% by weight of nitrates and 1-49% by weight of chlorides.

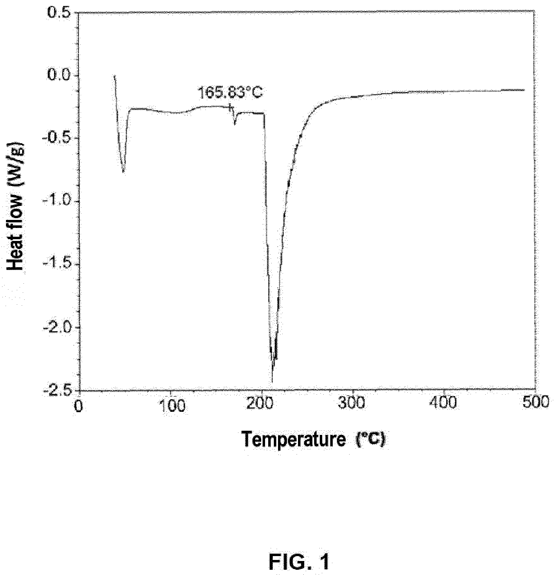

Figure 1 shows the DSC (Differential Scanning Calorimetry) curve for the nitrate and chloride mixture. This graph represents the heat flow variation with the temperature for a nitrate and chloride mixture. The first peak shown corresponds to melting of the assayed mixture, which is at about 165°C; the second peak shown correspond s to the heat being absorbed so as to remove water, since some of the nitrates used have water in their formulation.

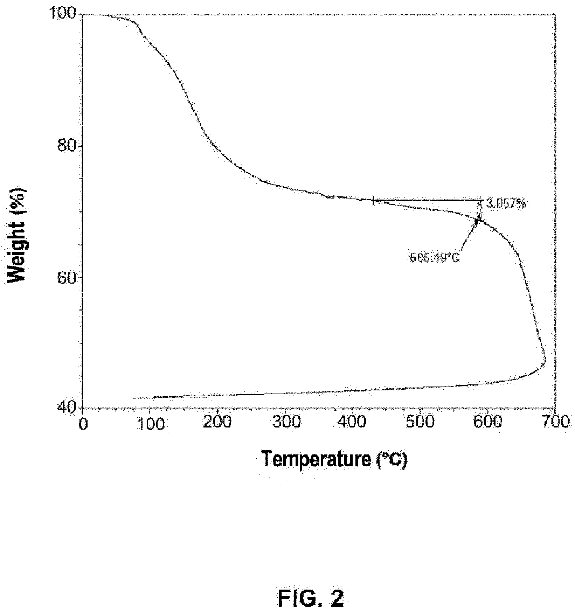

Figure 2 shows the TGA (Thermogravimetric Analysis) curve for the nitrates and chlorides mixture. This figure represents evolution of the weight of a sample of nitrates and chlorides with the temperature. The first fall that can be observed corresponds to water removal; then, there is an area of thermal stability, in which the sample barely undergoes variation in the mass thereof; and at the end of this area, the TGA curve starts to fall again coinciding with thermal decomposition of the nitrate and chloride mixture. The temperature coinciding with a loss of 3% by weight, with respect to the thermal stability range, is taken as the maximum operation temperature. In this case, the temperature is 585ºC.

### Example 2

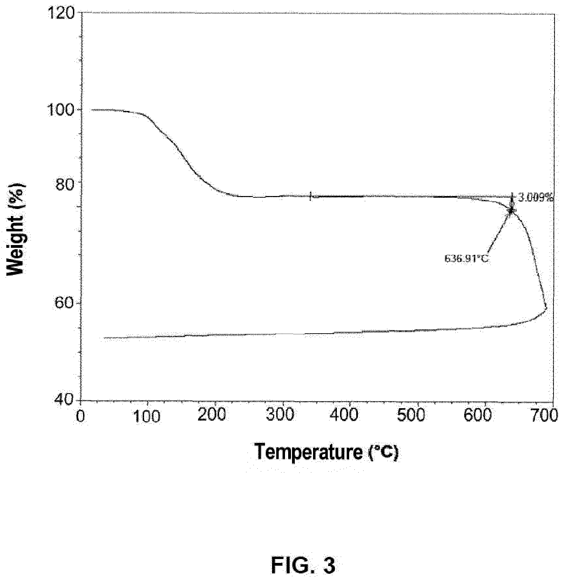

Thermal characterization is performed of a ternary mixture containing 50-99% of nitrate, 1-49% of nitrites and 1-79% of chlorides, by means of a TGA curve which is shown in Figure 3. In this case, the maximum operating temperature is 637ºC. Therefore, adding nitrites to the mixture, significantly improves thermal stability thereof.

### Description of the figures

Figure 1 shows a DSC (Differential Scanning Calorimetry) curve of a mixture containing 1-99% by weight of nitrates and the presence of 1-49% by weight of chlorides.
Figure 2 shows the TGA (Thermogravimetric Analysis) curve of a mixture containing 1-99% by weight of nitrates and the presence of 1-49% by weight of chlorides.
Figure 3 shows the TGA (Thermogravimetric Analysis) curve of a mixture containing 50-99% by weight of nitrates, 1-49% of nitrites and the presence of 1-49% by weight of chlorides.

## Claims

1. Saline inorganic composite material for use thereof as heat-carrying and solar power storage fluid comprising 1) a combination of inorganic salts comprising at least nitrates and chlorides; 2) at least, two cations of the alkaline, earth-alkaline, earth, carbon or amphigenic chemical groups and 3) inorganic or organic nanoparticles.

2. Saline inorganic composite material, according to claim 1, **characterized in that** the formulation contains 1-99% by weight of nitrates and 1-49% of chlorides.

3. Saline inorganic composite material, according to claim 1, **characterized in that** the combinations of nitrate and chloride inorganic salts also comprises other inorganic salts selected from sulphates, carbonates, nitrites and combinations thereof.

4. Saline inorganic composite material, according to claim 1, **characterized in that** the formulation comprises 50-99% by weight of nitrates, 1-49% of nitrites and 1-49% of chloride.

5. Saline inorganic composite material, according to claim 1, **characterized in that** the formulation contains nitrates (50-99% by weight), sulphates (1-49%) and chlorides (1-49%).

6. Saline inorganic composite material, according to claim 1, **characterized in that** the formulation contains nitrates (50-99%), carbonates (1-49%) and chlorides (1-49%).

7. Saline inorganic composite material, according to claim 1, **characterized in that** the formulation contains nitrates (50-99%), nitrites (1-49%), carbonates (1-49%) and chlorides (1-49%).

8. Saline inorganic composite material, according to claim 1, **characterized in that** the formulation contains nitrates (50-99%), nitrites (1-49%), sulphates (1-49%) and chlorides (1-49%).

9. Saline inorganic composite material, according to claim 1, **characterized in that** the formulation contains nitrates (50-99%), carbonates (1-49%), sulphates (1-49%) and chlorides (1-49%).

10. Saline inorganic composite material, according to the previous claims, **characterized in that** it comprises an element selected from Ca²⁺, K⁺ and Na⁺ cations.

11. Saline inorganic composite material, according to the previous claims, **characterized in that** it may further comprise at least one cation selected from rubidium, caesium, lithium, magnesium, strontium, barium, aluminium, silver, thallium, zinc, nickel, tin and lead.

12. Saline inorganic composite material, according to claim 11, **characterized in that** it comprises the rubidium cation in a proportion of 1-15% by weight with respect to the total weight of the saline inorganic composite material.

13. Saline inorganic composite material, according to claim 11, **characterized in that** it comprises the caesium cation in a proportion of 1-15% by weight with respect to the total weight of the saline inorganic composite material.

14. Saline inorganic composite material, according to claim 11, **characterized in that** it comprises the lithium cation in a proportion of 1-15% by weight with respect to the total weight of the saline inorganic composite material.

15. Saline inorganic composite material, according to claim 11, **characterized in that** it comprises the magnesium cation in a proportion of 1-15% by weight with respect to the total weight of the saline inorganic composite material.

16. Saline inorganic composite material, according to claim 11, **characterized in that** it comprises the strontium cation in a proportion of 1-15% by weight with respect to the total weight of the saline inorganic composite material.

17. Saline inorganic composite material, according to claim 11, **characterized in that** it comprises the barium cation in a proportion of 1-15% by weight with respect to the total weight of the saline inorganic composite material.

18. Saline inorganic composite material, according to claim 11, **characterized in that** it comprises the aluminium cation in a proportion of 1-15% by weight with respect to the total weight of the saline inorganic composite material.

19. Saline inorganic composite material, according to claim 11, **characterized in that** it comprises the silver cation in a proportion of 1-15% by weight with respect to the total weight of the saline inorganic composite material.

20. Saline inorganic composite material, according to claim 11, **characterized in that** it comprises the lithium cation in a proportion of 1-15% by weight with respect to the total weight of the saline inorganic composite material.

21. Saline inorganic composite material, according to claim 11, **characterized in that** it comprises the zinc cation in a proportion of 1-15% by weight with respect to the total weight of the saline inorganic composite material.

22. Saline inorganic composite material, according to claim 11, **characterized in that** it comprises the nickel cation in a proportion of 1-15% by weight with respect to the total weight of the saline inorganic composite material.

23. Saline inorganic composite material, according to claim 11, **characterized in that** it comprises the tin cation in a proportion of 1-15% by weight with respect to the total weight of the saline inorganic composite material.

24. Saline inorganic composite material, according to claim 11, **characterized in that** it comprises the lead cation in a proportion of 1-15% by weight with respect to the total weight of the saline inorganic composite material.

25. Saline inorganic composite material according to the previous claims, **characterized in that** the organic nanoparticles and/or the inorganic nanoparticles are present in a proportion ranging between 0.1 and 5% by weight with respect to the total weight of the saline inorganic composite material.

26. Saline inorganic composite material according to claim 25 **characterized in that** the organic nanoparticles are graphene nanoparticles.

27. Heat-carrying and thermal storage fluid comprising the saline inorganic composite material of claims 1-26.

28. Heat-carrying and thermal storage fluid according to claim 27, **characterized in that** it has a melting temperature from 130 to 230ºC, and a decomposition temperature higher than 580ºC.
